# EUROPÄISCHE PATENTSCHRIFT

(11) **EP 2 957 763 B1**
(45) Veröffentlichungstag und Bekanntmachung des Hinweises auf die Patenterteilung: **26.04.2017**
(21) Anmeldenummer: 15167260.7
(22) Anmeldetag: 12.05.2015
(51) Int. Cl.: F03B 13/10, F03B 17/06

(54) **UNTERWASSER-STRÖMUNGSKRAFTWERK**
UNDERWATER FLOW POWER PLANT
CENTRALE HYDROMOTRICE SOUS-MARINE

(30) Priorität: 10.06.2014 DE 102014211040
(43) Veröffentlichungstag der Anmeldung: 23.12.2015
(73) Patentinhaber: Voith Patent GmbH, 89522 Heidenheim (DE)
(72) Erfinder: Sommerkorn, Klaus, 89518 Heidenheim (DE)
(74) Vertreter: Dr. Weitzel & Partner

(56) Entgegenhaltungen:
- DE-A1-102008 020 964
- GB-A- 2 501 249
- GB-A- 2 504 516

## Beschreibung

Die Erfindung betrifft ein Strömungskraftwerk für den Offshore- oder Onshore-Betrieb, somit in Meeren oder in Flüssen, umfassend als wesentliche Bauteile eine Wasserturbine, einen mit dieser in Triebverbindung stehenden Generator sowie eine auf dem Gewässerboden stehende Tragkonstruktion. Turbine und Generator befinden sich in einem torpedoförmigen Gehäuse. Auf DE 10 2013 001 212 sowie DE 10 2012 025 127 wird verwiesen. Siehe auch DE 10 2008 020 964 A. Diese zeig ein tauchendes Wasserkraftwerk, bei dem das stromführende Kabel eine Länge aufweist, die groß genug ist, dass die Gondel zu Wartungsarbeiten an die Wasseroberfläche gehoben werden kann, ohne die Verbindung Kabel-Gondel lösen zu müssen. GB 25 501 249 A beschreibt eine stromerzeugende Unterwasseranlage mit einer Wasserturbine und einem wellenbetriebenen Energieerzeuger. Dabei ist ein Kabel vorgesehen, das an den Energieerzeuger angeschlossen ist.

Turbine, Generator und Gehäuse bilden die sogenannte Gondel. Diese ist von einer Tragkonstruktion getragen. Diese steht auf dem Gewässerboden, beispielsweise auf dem Meeresboden. Sie kann in den Boden mehrere Meter tief eingelassen sein. Auch gibt es Schwergewichtskonstruktionen, zum Beispiel aus Beton, die kein Anbohren des Bodens verlangen. Die Tragkonstruktion kann aus einem Pfahl bestehen.

Ein großes Problem bei allen Unterwasseranlagen sind Wartung und Reparatur. So bedürfen insbesondere die Turbine und der Generator von Zeit zu Zeit der Wartung. Auch außerplanmäßige Reparaturarbeiten sind notwendig. Solche Arbeiten können nicht unter Wasser vorgenommen werden, sondern auf einem Schiff oder an Land. Die Gondel muss somit von der Tragkonstruktion abgekoppelt und auf ein Schiff gehoben werden. Dies geschieht im Allgemeinen mittels eines Schiffskrans sowie mit einer Seilkonstruktion.

Die gesamte Anlage umfasst aber außer Turbine und Generator noch weitere Geräte, die dem Steuern, Erfassen von Daten und anderen Funktionen dienen, die sich ebenfalls unter Wasser befinden, und die demgemäß hermetisch gekapselt sind. Zu solchen Geräten gehören gegebenenfalls Sensoren, Gleichrichter, Transformatoren, eine zentrale Prozesseinheit usw.

Sie sind in einer wasserdichten Box eingeschlossen die Box kann sich an irgendeiner Stelle des Strömungskraftwerkes befinden, beispielsweise in oder an der Tragstruktur sowie in oder an der Gondel. Die Gondel selbst kann unterteilt sein, und es kann ein Teil der Gondel die Box bilden. Die Geräte sind im Allgemeinen hochempfindlich. Eine Wartung oder ein Austausch unter Wasser ist deshalb nicht möglich. Sie müssen daher in ihrer Gesamtheit an die Wasseroberfläche gehoben werden. Dabei gibt es ein weiteres Problem: Die genannten Geräte stehen miteinander sowie mit anderen Aggregaten, beispielsweise mit dem Generator, in leitender Verbindung, das heißt über irgendwelche Leiterstränge wie elektrische oder elektronische Kabel, gegebenenfalls auch über pneumatische oder hydraulische Leitungen.

Hieraus kann sich die Notwendigkeit ergeben, nicht nur die in einer hermetisch gekapselten Box befindlichen Geräte an die Oberfläche zu bringen, sondern auch andere Teile wie die komplette Gondel, und zwar auch dann, wenn die darin enthaltenen Teile gar keiner Wartung oder Reparatur bedürfen.

Will man Wartungen oder Reparaturen vornehmen und dabei das gesamte Wasserkraftwerk an Ort und Stelle lassen, das heißt unter Wasser, so kann man die genannten Arbeiten zwar auch unter Wasser von Tauchern erledigen lassen. Solche Tauchgänge sind jedoch schwierig. Manchmal müssen sie wiederholt werden, da die Arbeiten nicht mit einem einzigen Tauchgang bewältigt werden können. Außerdem ist jeder Tauchgang für die Taucher mit Lebensgefahr verbunden.

Der Erfindung liegt die Aufgabe zugrunde, ein Unterwasserkraftwerk derart zu gestalten, dass Wartungs- und Reparaturarbeiten einfacher und kostengünstiger durchgeführt werden können, jedenfalls ohne die Notwendigkeit von Tauchgängen.

Diese Aufgabe wird mittels eines Kraftwerkes gemäß Anspruch 1 gelöst.
Der Erfinder hat Folgendes erkannt:
Es gibt bei den genannten Geräten, die in einer hermetisch abgeschlossenen Box gekapselt sind, solche Geräte, die nicht oder kaum wartungsbedürftig oder reparaturanfällig sind, sowie andere Geräte, bei denen dies in hohem Maße der Fall ist.

Die Lösung der genannten Aufgabe besteht in Folgendem:
- Die genannten Geräte, das heißt die sensiblen, reparaturanfälligen einerseits und die unsensiblen, nicht-reparaturanfälligen andererseits werden in zwei verschiedenen Boxen untergebracht.
- Die Geräte der beiden Kategorien bleiben dabei durch die genannten Stränge - elektrische Kabel, elektronische Kabel usw. - miteinander verbunden.
- Die Länge der Stränge wird mindestens gleich der Entfernung zwischen der Wasseroberfläche und der Einbauposition der Box mit den sensiblen Geräten bemessen.

Die Wassertiefen von Unterwasserkraftwerken liegen in der Größenordnung von zwischen 5 und 30 m, und sind somit relativ leicht zu überbrücken. Der Leiterstrang kann bei in Arbeitsposition befindlicher Gerätebox auf einer Rolle aufgerollt sein. Beim Hochholen der Box zum Zwecke der Wartung oder der Reparatur auf das Deck eines Schiffes spult sich der Strang ab.

Die Ersparnisse der Erfindung sind außerordentlich hoch. Es brauchen somit keine Kabelverbindungen gelöst zu werden, wenn man die Box mit sensiblen Geräten hoch holt, und demgemäß auch keine Kabelverbindungen wieder hergestellt werden.

Die Erfindung ist anhand der Zeichnung näher erläutert. Darin ist im Einzelnen Folgendes dargestellt:
- Figur 1: zeigt ein erfindungsgemäßes, modular aufgebautes Unterwasserkraftwerk mit einer von der Tragstruktur abgekoppelten Maschinengondel.
- Figur 2: zeigt im Längsschnitt ein Unterwasserkraftwerk für die Ausgestaltungsalternative der Erfindung mit einem teilbaren elektrischen Generator.

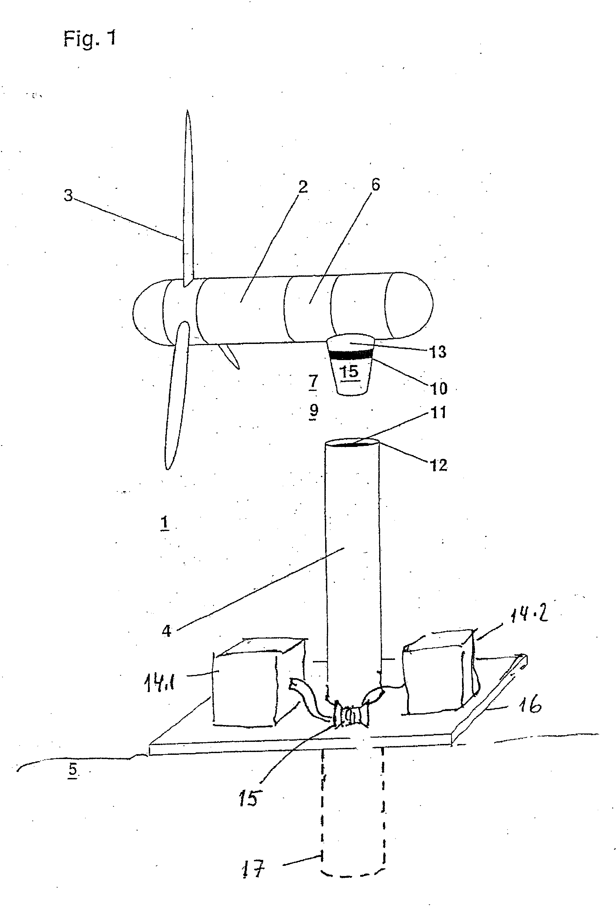

Figur 1 zeigt schematisch vereinfacht ein erfindungsgemäßes Unterwasserkraftwerk. Dieses ist gattungsgemäß modular aufgebaut und weist eine Tragstruktur 4 auf, die vorliegend bis zum Gewässergrund 5 geführt ist. Die Tragstruktur 4 kann einen einzigen Pfahl umfassen, der mit seinem unteren Ende 4.1 in den Meeresboden eingelassen ist. An diese Tragstruktur 4 ist eine Maschinengondel 2 ankoppelbar, die wiederum die Wasserturbine 3 trägt. Für die vorliegende Ausgestaltung ist zusätzlich ein elektrischer Generator 6 in der Maschinengondel 2 aufgenommen. Dieser wird wenigstens mittelbar von der Wasserturbine 3 angetrieben und setzt die aus der Strömung aufgenommene kinetische Energie in elektrische Energie um. Zur Ankopplung der Maschinengondel 2 an der Tragstruktur 4 ist eine Kopplungsvorrichtung vorgesehen, umfassend eine Aufnahme 12 und einen Stutzen 13, die zusammenfügbar sind.

Das modular aufgebaute Unterwasserkraftwerk 1 weist eine induktive Übertragungseinrichtung 7 auf, die dazu dient, die vom elektrischen Generator 6 erzeugte elektrische Leistung berührungslos von der Maschinengondel 2 auf die Tragstruktur 4 zu übertragen. Hierzu kann die induktive Übertragungsvorrichtung 7 einen Transformator 9 umfassen, dessen Primärseite 10 der Maschinengondel 2 und dessen Sekundärseite 11 der Tragstruktur 4 zugeordnet sind. Dabei kann die induktive Übertragungseinrichtung 7, wie dargestellt, Teil der Kopplungsvorrichtung 15 sein oder in deren Nähe ausgebildet sein.

Zur Realisierung einer einfachen Koppelbarkeit ist die induktive Übertragungseinrichtung 7 so ausgeführt, dass deren Komponenten gegenüber dem Umgebungswasser gekapselt sind, der Luftspaltbereich des elektrischen Generators ist nach der Ankopplung geflutet.

Es ist eine erste Box 14.1 vorgesehen. Diese enthält weniger störanfällige Geräte, ferner eine Box 14.2, die störanfällige Geräte enthält.

Bei den störanfälligen Geräten kann es sich um Geräte zum Betreiben der Anlage, zum Steuern, zum Erfassen von Parametern und anderen Funktionen handeln. Die störanfälligen Geräte können auch Umrichter, Schalter, Transformatoren oder hydraulische Aggregate sein. Grundsätzlich kommt alles an Geräten in Betracht, was sich bis zum Netzanschluss befindet - gekennzeichnet durch eine feste Frequenz. Solche Geräte müssen häufig gewartet und gegebenenfalls ausgetauscht werden. Die genannten Geräte können wiederum nach Wartungshäufigkeit geteilt sein. Auch können wartungsanfällige Teile in Baugruppen beziehungsweise Boxen zusammengefasst sein.

Geräte der beiden Boxen arbeiten miteinander zusammen und sind demgemäß elektrisch, elektronisch oder anderweitig leitend miteinander verbunden. Hierzu dient das Kabel 8. Kabel 8 hat zwischen den beiden Boxen 14.1 und 14.2 eine große Länge, die wenigstens der Wassertiefe entspricht, gemessen zwischen dem Wasserspiegel und der Position von Box 14.2 in montiertem Zustand. Zum Aufwickeln des Kabelabschnittes zwischen den beiden Boxen ist eine Kabelrolle 15 vorgesehen.
Box 14.2 mit den störanfälligen Geräten ist an der Tragstruktur 4, beispielsweise an einer Fundamentplatte 16, fixiert. Die Fixierung ist derart gestaltet und angeordnet, dass sie leicht und schnell hergestellt, aber ebenso leicht und schnell wieder gelöst werden kann. Hier kommt beispielsweise eine magnetische Fixierung in Betracht. Gegebenenfalls kann die Tragstruktur 4 einen im Meeresboden gegründeten Pfahl 17 aufweisen.

Die Boxen mit störanfälligen Geräten sowie mit nicht störanfälligen Geräten können sich in jeglicher Position im Strömungskraftwerk befinden, beispielsweise in der Gondel selbst, in der Turbine, im Tragwerk oder an diesen genannten Bauteilen. Sie können derart integriert sein, dass sie optisch gar nicht mehr erkennbar sind.

Aufgrund der erfindungsgemäßen Anordnung der beiden Boxen 14.1, 14.2 sowie des langen Kabels 8 kann Box 14.2 mit störanfälligen Geräten bei Bedarf oder von Zeit zu Zeit aus ihrer Fixierung an der Tragstruktur 4 gelöst und über den Wasserspiegel hochgehoben werden, beispielsweise auf das Deck eines Schiffes, wo sich jegliche Arbeiten im Trockenen und in aller Ruhe vornehmen lassen.

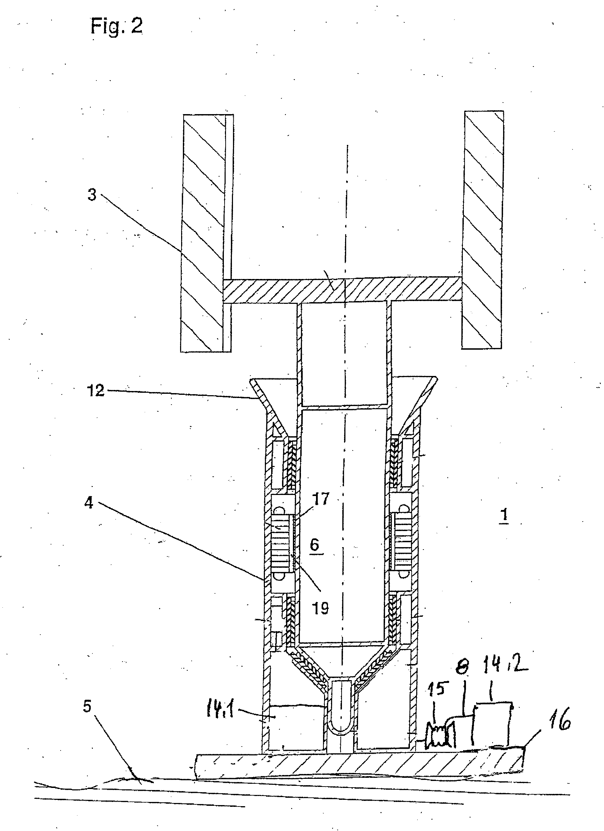

Figur 2 zeigt schematisch vereinfacht ein modulares Unterwasserkraftwerk 1, dessen Wasserturbine 3 als Vertikalläufer ausgebildet ist.

Die Boxen 14.1 und 14.2 können auch nochmals aufgeteilt sein in weitere Boxen, womöglich geordnet nach Störanfälligkeit und/oder Möglichkeit des Zugriffs von Geräten.

Das hier genannte Kabel 8 kann mehrere Stränge umfassen, die unterschiedliche Medien leiten, eingeschlossen Druckluft, Unterdruck, elektrische Ströme usw.

Es ist denkbar, dass die Kabel (8) von einer mechanischen Führungsstruktur geführt werden, somit nicht nur von einer Kabelrolle (15), sondern auch von einer Schere oder einem Teleskop.

### Bezugszeichenliste

- 1: Unterwasserkraftwerk
- 2: Maschinengondel
- 3: Wasserturbine
- 4: Tragstruktur
- 4.1: Unteres Ende eines Pfahles
- 5: Gewässergrund
- 6: elektrischer Generator
- 7: Übertragungseinrichtung
- 8: Kabel
- 9: Transformator
- 10: Primärseite des Transformators
- 11: Sekundärseite des Transformators
- 12: Aufnahme
- 13: Stutzen
- 14.1: Box zum Aufnehmen von Geräten geringer Störanfälligkeit
- 14.2: Box zum Aufnehmen von Geräten hoher Störanfälligkeit
- 15: Kabelrolle
- 16: Fundamentplatte
- 17: Pfahl

## Patentansprüche

1. Tauchendes Wasserkraftwerk, umfassend die folgenden Merkmale:
1.1 eine Gondel (2), die eine Wasserturbine (3) sowie einen mit dieser in Triebverbindung stehenden Generator (6) enthält;
1.2 eine Tragstruktur (4), die die Gondel trägt und die im oder auf dem Meeresboden gegründet ist;
1.3 eine Anzahl von Geräten, die dem Betreiben, Steuern, Erfassen von Daten und anderen Funktionen dienen, und die hermetisch gekapselt sind; **gekennzeichnet durch** die folgenden Merkmale:
1.4 es ist eine erste Box (14.1) vorgesehen, die Geräte geringer Störanfälligkeit enthält;
1.5 es ist eine zweite Box (14.2) vorgesehen, die Geräte höherer Störanfälligkeit enthält;
1.6 die beiden Gruppen von Geräten sind **durch** Leiterstränge (8) wie elektronische/elektrische Kabel, Schläuche für fließfähige Medien aneinander angeschlossen;
1.7 die Leiterstränge (8) sind wenigstens so lang wie der Abstand zwischen dem Wasserspiegel und der zweiten Box in Arbeitsposition.

2. Tauchendes Wasserkraftwerk nach Anspruch 1, **dadurch gekennzeichnet, dass** eine Einrichtung (15) zum Aufwickeln des Stranges vorgesehen ist.

3. Tauchendes Wasserkraftwerk nach Anspruch 2, **dadurch gekennzeichnet, dass** die Einrichtung (15) eine Kabelrolle mit vertikaler oder horizontaler Drehachse umfasst.

4. Tauchendes Wasserkraftwerk nach Anspruch 2 oder 3, **dadurch gekennzeichnet, dass** die Einrichtung (15) an oder in der Gondel (2) oder an oder in der Fundamentstruktur (4) angeordnet ist.

5. Tauchendes Wasserkraftwerk nach einem der Ansprüche 1 bis 3, **dadurch gekennzeichnet, dass** die Boxen (14.1, 14.2) an oder in der Tragstruktur (4) oder an oder in der Gondel angeordnet sind.

## Claims

1. An underwater hydroelectric power plant, comprising the following features:
1.1 a nacelle (2) which contains a water turbine (3) as well as a generator (6) which is in driving connection with said turbine;
1.2 a support structure (4) which carries the nacelle and is grounded in or on the seabed;
1.3 a number of devices which are used for the operation, control and acquisition of data and other functions, and which are hermetically encapsulated; **characterized by** the following features:
1.4 a first box (14.1) is provided which contains devices of low susceptibility to faults;
1.5 a second box (14.2) is provided which contains devices of higher susceptibility to faults;
1.6 the two groups of devices are connected to each other by strands of conductors (8) such as electronic/electrical cables, hoses for flowable media;
1.7 the strands of conductors (8) are at least as long as the distance between the water level and the second box in the working position.

2. An underwater hydroelectric power plant according to claim 1, **characterized in that** a device (15) is provided for winding up the strand.

3. An underwater hydroelectric power plant according to claim 2, **characterized in that** the device (15) comprises a cable drum with a vertical or horizontal rotational axis.

4. An underwater hydroelectric power plant according to claim 2 or 3, **characterized in that** the device (15) is arranged on or in the nacelle (2) or on or in the foundation structure (4).

5. An underwater hydroelectric power plant according to one of the claims 1 to 3, **characterized in that** the boxes (14.1, 14.2) are arranged on or in the support structure (4) or on or in the nacelle.

## Revendications

1. Génératrice hydroélectrique submersible, comprenant les éléments suivants :
1.1 une nacelle (2) contenant une turbine hydroélectrique (3) et un générateur (6) en liaison active avec celle-ci ;
1.2 une structure portante (4) qui porte la nacelle et qui et ancrée dans ou sur le fond de la mer ;
1.3 un certain nombre d'appareils servant au fonctionnement, à la commande, à l'acquisition de données et autres fonctions et encapsulés hermétiquement,
**caractérisée en ce que** :
1.4 il est prévu un premier boîtier (14.1) qui contient les appareils peu sensibles aux pannes ;
1.5 il est prévu un deuxième boîtier (14.2) qui contient les appareils plus sensibles aux pannes ;
1.6 les deux groupes d'appareils sont reliés entre eux par des faisceaux de conduites (8) telles que des câbles électroniques ou électriques ou des tuyaux pour des fluides ;
1.7 la longueur des faisceaux de conduites (8) est au moins égale à la distance entre le niveau de l'eau et le deuxième boîtier dans la position de fonctionnement.

2. Génératrice hydroélectrique submersible selon la revendication 1, **caractérisée en ce qu'**il est prévu un dispositif (15) pour enrouler le faisceau.

3. Génératrice hydroélectrique submersible selon la revendication 2, **caractérisée en ce que** le dispositif (15) comprend un rouleau de câble à axe de rotation vertical ou horizontal.

4. Génératrice hydroélectrique submersible selon la revendication 2 ou 3, **caractérisée en ce que** le dispositif (15) est disposé sur ou dans la nacelle (2) ou sur ou dans la structure de fondations (4).

5. Génératrice hydroélectrique submersible selon l'une des revendications 1 à 3, **caractérisée en ce que** les boîtiers (14.1, 14.2) sont disposés sur ou dans la structure portante (4) ou sur ou dans la nacelle.
